# EUROPEAN PATENT APPLICATION

(11) **EP 1 440 928 A1**
(43) Date of publication of application: **28.07.2004**
(21) Application number: 04250293.0
(22) Date of filing: 21.01.2004
(51) Int. Cl.: B65H 35/00, B64C 1/00, B65H 37/00

(54) **Apparatus useful for applying sealant material to a structural member**

(30) Priority: 21.01.2003 US 349132
(71) Applicant: W.L. GORE & ASSOCIATES GmbH, 85640 Putzbrunn (DE)
(72) Inventor: Burmann, Gerhard, 91174 Spalt (DE); Bowden, Stephen J., 91785 Pleinfeld (DE)
(74) Representative: Shanks, Andrew

(57) **Abstract**

Apparatus useful for applying sealant material to structural parts. The apparatus comprises a base material (10), means (13) for attaching a hub (14) to the base, means (15) for guiding a structural part through the apparatus to engage a sealant, and pressure means (16) disposed over means (15) for guiding a structural part. The pressure means (16) cooperates with the means (15) for guiding a structural part to apply pressure to the structural part while guiding the structural part through the apparatus.

## Description

### FIELD OF THE INVENTION

The present invention relates to an apparatus which is useful for applying sealant materials to structural members.

### BACKGROUND OF THE INVENTION

Sealing against the passage of fluids - gasses or liquids - between faying surfaces is a very old art. Faying surfaces are those which directly abut each other, or which almost abut each other with an intermediate body between them, such as a sealant. Built-up structures are replete with faying surfaces. The substrates bearing the surfaces are customarily joined together by fasteners such as rivets or threaded combinations whose purpose is to hold them against separation and to limit or prevent relative shear movement between them.

Especially in structures which are subject to a variety of environments such as substantial temperature change, and deflection due to bending or vibration, relative movement and separation between local regions of confronting faying surfaces cannot be completely prevented. Thus, even those flat surfaces which are practically attainable when brought together will, in use, permit leakage of fluid between them.

This may be a tolerable situation where the confinement of a fluid is not required. Many faying surfaces are joined without regard for sealing. However, in aircraft fuselages, leakage of air from a pressurized cabin should at least be minimized. There are numerous other examples in aircraft and spacecraft, as well as in ground based structures where fluid containment (gas or liquid) in a built-up structure is required.

Furthermore, even when the prevention of fluid leakage is not an absolute requirement (e.g., aircraft fuselages, trains and automobiles) it may be desirable to prevent the leakage of fluids which could promote corrosion, or equally important, to prevent structural degradation of the load carrying structure. For example, in aircraft applications it would be desirable to provide leak-free faying surfaces for both primary and non-primary structures in the aircraft. Either structure would clearly benefit from leak-free joining of faying surfaces.

This is an old problem and it has been solved in various ways which utilize sealants applied to appropriate parts of the structure. The techniques for application and subsequent cleanup of the known wet sealants are both expensive and labor intensive, and complicate the assembly, maintenance and repair of the structure.

In aircraft construction, a wet layer of sealant is often placed between the faying surfaces at the time they are joined together, and the sealant cures after the assembly is completed. This is a labor-intensive process and worker protection must be provided against contact with such a sealant, requiring the use of masks and gloves. Solvents such as 1, 1, 1-trichloroethane and ether solvents which are used for the cleanup bring their own hazards.

In addition to being costly and labor intensive, the application of a wet sealant also requires that the sealant procedure be conducted at the ultimate point of assembly of the built-up structure (e.g., for aircraft at the point of aircraft construction).

The above labor and economic problems and shortcomings of the sealant which is applied wet at the time of assembly are severe. Moreover, they also involve the economic problems of material waste and structural weight penalties. Accordingly, there is a need for improved sealant materials and methods for applying such materials to faying surfaces. In this regard, certain dry sealants (i.e. sealants which are not liquid or wet when applied to the part), particularly sealant tapes, have been recently introduced which may be applied to faying surfaces without many of the above-mentioned problems. Exemplary of such sealant tapes is SKYFLEX® Aircraft Sealant from W. L. Gore & Associates, Inc. Such a sealant tape product has none of the above-mentioned limitations and does not require the use of protective measures during installation. SKYFLEX® Aircraft Sealant is manufactured from expanded polytetrafluoroethylene (ePTFE). This material is chemically inert and not affected by any common chemical. It functions over a wide temperature range (-240° C to +260° C), does not age and is weather and UV-resistant.

### SUMMARY OF THE INVENTION

The present invention provides, among other things, an apparatus comprising:
(a) a base having a top surface and a bottom surface;
(b) means for attaching a hub to the base;
(c) means for guiding a structural part through the apparatus to engage a sealant; and
(d) pressure means disposed over the means for guiding a structural part, the pressure means cooperating with the means for guiding a structural part to apply pressure to the structural part and the sealant while guiding the structural part through the apparatus.

### BRIEF DESCRIPTION OF THE DRAWINGS

Figure 1 is a perspective view of a longitudinal stringer section.
Figure 2 is a perspective view of a longitudinal stringer with a dry sealant being provided at a faying surface.
Figure 3 is a cross-section of an apparatus according to the invention.
Figure 4 is a side view of an apparatus according to the invention.

### DETAILED DESCRIPTION OF THE INVENTION

The apparatus according to the present invention is useful, for example, to apply sealant material to at least one faying surface of a part. More particularly, the apparatus may be used to apply a dry sealant material to an aircraft longitudinal stringer, longeron, shear tie, etc. structural part member which ultimately will be attached to a mating part of an aircraft structure. The invention will be best understood with reference to the figures, wherein certain exemplary embodiments of the invention are set forth.

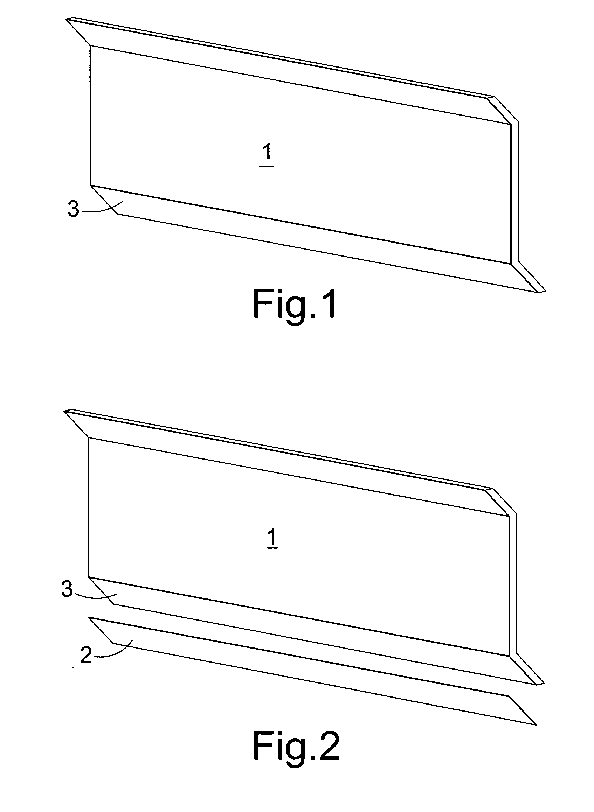

Figure 1 is representative of a longitudinal stringer section 1 having faying surface 3, which may be used in the construction of aircraft. Of course, one skilled in the art will recognize that stringer sections may be in shapes other than as depicted in the Figures. Figure 2 shows such a longitudinal stringer section 1 with dry sealant material 2 being provided to faying surface 3.

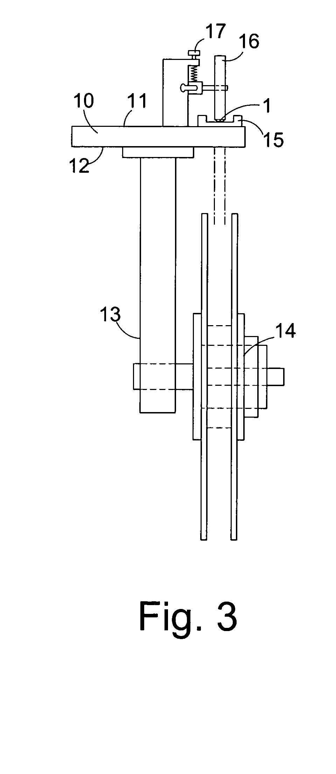

Figure 3 is a cross-sectional view of an apparatus according to the invention. Figure 3 shows base member 10 having a top surface 11 and a bottom surface 12. Also shown is a means 13 for attaching a hub 14 to the base 10. Means for guiding a structural part 15 is provided for guiding a structural part through the apparatus to engage a sealant with the structural part 1. Also shown is pressure means 16 disposed over means for guiding a structural part 15, the pressure means 16 cooperating with the means for guiding a structural part 15 to apply pressure to the structural part and sealant while guiding the structural part through the apparatus. Also in Figure 3 is shown optional pressure adjusting means 17 for adjusting the pressure of pressure means 16.

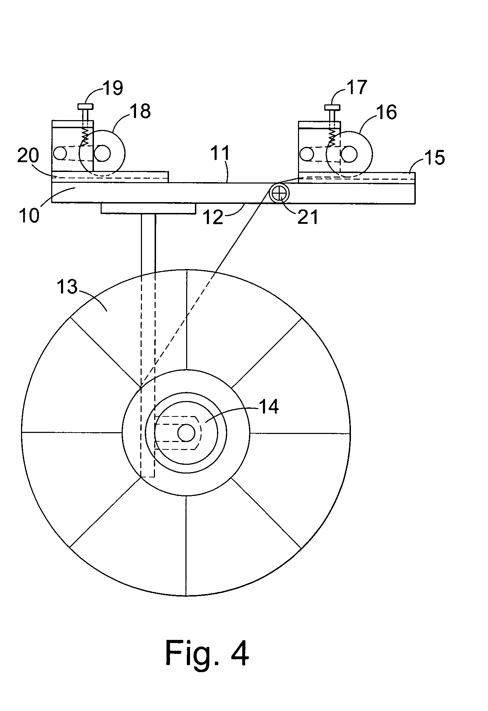

Turning now to Figure 4, there is shown a side view of a further embodiment according to the invention. In addition to the elements shown in Figure 3 and described above, as can be seen, Figure 4 demonstrates an aspect of the invention wherein an additional means for guiding a structural part 20, pressure means 18, and further optional pressure adjusting means 19 are shown. These further elements may be desirable to provide further precision as the structural part is guided through the apparatus to engage the sealant material. Also shown in Figure 4 is optional sealant guiding means 21 for guiding the sealant material to means for guiding a structural part 15 and, ultimately, into contact with structural part 1.

As will be understood by the skilled artisan, means for guiding a structural part 15 may be provided in any number of forms so long as it is capable of guiding the structural part through the apparatus to engagement with the sealant material. As shown in the figures, means for guiding a structural part 15 is in the form of a block having raised, longitudinally extending edges (forming a groove in the block) for guiding the structural part into engagement with pressure means 16 and the sealant material. It may be desirable to construct means for guiding a structural part 15 from a material having a relatively low coefficient of friction to facilitate movement of the structural part 1 through the apparatus. In an aspect of the invention means for guiding a structural part 15 is a block, as described above, constructed from a material comprising polytetrafluoroethylene (PTFE).

In a further aspect of the invention, means for guiding a structural part 15 may also be provided with, for example, at least one wheel or roller on at least one surface thereof. In this regard, a wheel could have a ratio of width to diameter of from about 1:10 to about 6:10 and a roller could have a width to diameter ratio of from about 6:10 to about 10:10. For example, when means for guiding a structural part 15 is a block, as described above, the bottom surface of the groove, or the side surfaces of the groove, or all surfaces of the groove may be provided with a plurality of wheels or rollers to further facilitate the structural part moving through the apparatus. Moreover, the wheels or rollers may also help reduce wear of the block material. The position of the wheels or rollers may also be adjustable in order to increase or decrease the width or depth of the groove section of the block such as to allow for easy adaptability of the apparatus for use with varying sized parts.

The means for attaching hub 14 to base 10 is indicated by 13 and may be any suitable material which is capable of attaching, suspending, or the like, hub 14 from base 10. Hub 14 should be capable of holding a supply of sealant material. The sealant material is preferably a dry sealant.

As discussed above, the dry sealant could be any material that is not liquid or wet when applied to the part. For example, the dry sealant could be a putty-like material, a solid gasket material, etc. A preferred dry sealant material is a sealant tape which is provided to hub 14. Preferably, the dry sealant material is a single part, dry sealant and even more preferably SKYFLEX ® Aircraft Sealant from W. L. Gore & Associates, Inc. For example, SKYFLEX ® Aircraft Sealant is provided as a roll which is easily mountable onto hub 14. SKYFLEX ® Aircraft Sealant is provided with an adhesive material on at least one side thereof. The tape material can be positioned onto hub 14 so that the adhesive side can come into contact with the structural member as it is advanced through the apparatus and, thus, result in the sealant tape material being adhered to the desired side of the part.

Optional sealant guiding means 21 can be any material or form capable of helping to guide the sealant material to the means for guiding a structural part 15 and into contact with the structural part. For example, sealant guiding means 21 may be in the form of a wheel capable of rotating about its axis and having slightly raised edges forming a groove in the wheel. Or sealant guiding means 21 may be a block with slightly raised edges forming a groove in the block. A preferred material for sealant guiding means 21 is PTFE. Furthermore, sealant guiding means may be in the form of rollers. In any event, sealant guiding means 21 should be capable of helping to guide the sealant material toward means for guiding a structural part 15 and into contact with the structural part.

Pressure means 16 is shown in the figures as a wheel (or disk) which is capable of rotating about its axis as the structural part moves through the apparatus. Of course, pressure means 16 may be provided in other forms, so long as it is capable of cooperating with means for guiding a structural part 15 to apply pressure to the structural part and sealant, while allowing the structural part to move through the apparatus. As discussed above, pressure means 16 may be provided with pressure adjusting means 17. Pressure adjusting means 17 may be any suitable device; for example, it may be a spring-loaded device which is adjustable by simple hand turning.

It should be understood that the apparatus may take a variety of forms and sizes. In one embodiment, the apparatus could be simply attached to a table by using, for example, removable clamps and used at a factory site. In a further embodiment the apparatus could be provided with its own support means (e.g., the apparatus could have a plurality of legs attached thereto). The apparatus could, of course, be portable and actually be brought onto an aircraft to apply the dry sealant material to a structural part.

To produce a part having a sealant material disposed thereon, a structural part 1 simply needs to be placed into contact with means for guiding a structural part 15 and advanced through means for guiding a structural part 15 (either by hand or by any suitable automated procedure). As structural part 1 is advanced toward means for guiding a structural part 15, the sealant material is placed into contact with structural part 1. As structural part 1 (or the sealant material, depending on the side of the part that the sealant is placed) comes into contact with pressure means 16, pressure means 16 and means for guiding a structural part 15 cooperate to apply pressure to structural part 1 and the sealant material. After structural part 1 has passed through means for guiding a structural part 15, any excess sealant material may be simply removed from the structural part 1 by cutting, slicing, or the like.

The invention, having been described above, is not to be limited by the above description and the embodiments shown in the drawings, which are given by way of example and not of limitation, but only in accordance with the scope of the appended claims.

## Claims

1. An apparatus comprising:
(a) base 10 having a top surface 11 and a bottom surface 12;
(b) means for attaching hub 14 to base 10;
(c) means for guiding a structural part 15 through the apparatus to engage a sealant; and
(d) pressure means 16 disposed over the means for guiding a structural part 15, pressure means 16 cooperating with the means for guiding a structural part 15 to apply pressure to the structural part and the sealant while guiding the structural part through the apparatus.

2. The apparatus of claim 1 wherein the pressure means is capable of applying a constant pressure to the structural part.

3. The apparatus of claim 2 wherein the pressure means is capable of being adjusted to different pressures.

4. The apparatus of claim 1 wherein the means for guiding a structural part comprises at least one wheel.

5. The apparatus of claim 4 wherein the means for guiding a structural part comprises a plurality of wheels.

6. The apparatus of claim 1 wherein the means for guiding a structural part comprises at least one roller.

7. The apparatus of claim 6 wherein the means for guiding a structural part comprises a plurality of rollers.

8. The apparatus of claim 1 wherein the means for guiding a structural part is a block having raised, longitudinally extending edges to form a groove in the block.

9. The apparatus of claim 1 further comprising a sealant guiding means 20 for guiding the sealant to the means for guiding a structural part and into contact with the structural part.

10. The apparatus of claim 1 wherein the sealant is a dry sealant.

11. The apparatus of claim 10 wherein the dry sealant is tape.

12. The apparatus of claim 11 wherein the tape has an adhesive material applied to at least one side thereof.

13. The apparatus of claim 1 further comprising a plurality of the means for guiding a structural part and a plurality of the pressure means.

14. The apparatus of claim 10 wherein the tape is PTFE tape.

15. The apparatus of claim 14 wherein the PTFE tape has an adhesive applied to at least one side thereof.

16. The apparatus of claim 8 wherein the block is constructed from PTFE.
